# FASCICULE DE BREVET EUROPEEN

(11) **EP 0 518 758 B1**
(45) Date de publication et mention de la délivrance du brevet: **01.02.1995**
(21) Numéro de dépôt: 92401607.4
(22) Date de dépôt: 10.06.1992
(51) Int. Cl.: G01M 3/26, G01M 3/28

(54) **Procédé et dispositif de contrôle de la réalisation correcte d'un assemblage**
Verfahren und Vorrichtung zur Kontrolle der korrekten Durchführung einer Montage
Procedure and device for controlling the correct realisation of an assembly

(30) Priorité: 14.06.1991 FR 9107316
(43) Date de publication de la demande: 16.12.1992
(73) Titulaire: RENAULT AUTOMATION, 92100 Boulogne (FR)
(72) Inventeur: Thurier, Yvan, F-94320 Thiais (FR)
(74) Mandataire: Robert, Jean-Pierre

(56) Documents cités:
- EP-A- 0 383 996
- DE-A- 3 039 050
- GB-A- 285 320

## Description

La présente invention concerne le contrôle des assemblages mécaniques et a pour objet un procédé et un dispositif pour assurer cette fonction.

Il existe plusieurs moyens pour réaliser le contrôle de la réalisation correcte d'un assemblage. On citera parmi ceux-ci:
- le contrôle dimensionnel de l'ensemble des pièces montées qui consiste à comparer une ou plusieurs mesures réalisées sur l'ensemble monté avec la somme des cotes théoriques de chaque pièce formant l'assemblage. L'inconvénient de ce contrôle réside dans l'incertitude de la comparaison résultant des tolérances de fabrication. En effet, par le jeu de ces tolérances, un assemblage de pièces peut être déclaré à tort défectueux du seul fait que les pièces qui le composent sont au maximum de leurs tolérances, ou déclaré, également à tort correct, si les pièces sont au minimum de ces tolérances.
- le contrôle par palpage de l'ensemble assemblé, tel qu'il est décrit dans le document FR-A- 2653550 qui met en oeuvre un palpeur complexe et ne pouvant pas convenir pour des montages de petites dimensions.
- le contrôle optique qui consiste à mettre en oeuvre des dispositifs de métrologie optique ou des dispositifs de reconnaissance de formes par analyse vidéo ou analogue qui sont encore de manipulation délicate et de coût élevé.

On entend, par la présente invention, proposer un procédé différent, fondé sur l'observation du comportement de fuites pneumatiques au travers de l'assemblage, ce qui permet de mettre en oeuvre un dispositif, robuste, de construction simple, de manipulation aisée et qui peut être intégré dans un poste de contrôle robotisé.

A cet effet l'invention a donc pour premier objet un procédé de contrôle de la qualité d'un assemblage mécanique composé de constituants entre lesquels existe un jeu de montage par lequel une fuite pneumatique peut être créée à partir d'une extrémité de l'assemblage offrant une surface avec laquelle il est possible de réaliser un raccordement temporaire étanche, qui consiste à détecter la position d'équilibre d'un élément mobile dont deux faces opposées sont soumises respectivement à la pression règnant dans une chambre située en amont de la surface de raccordement et à celle règnant dans une chambre située en amont d'un assemblage de référence. On comprend que ce procédé exploitera le fait qu'un montage défectueux présentera plus de fuites que le montage de référence, correct par hypothèse. Dans ces conditions, l'équilibre de l'élément mobile est rompu et son mouvement est exploité pour signaler la non-conformité de l'assemblage.

Le deuxième objet de l'invention est un dispositif pour mettre en oeuvre le procédé ci-dessus qui comporte un premier corps définissant une première chambre dont une paroi est portée par l'extrémité susdite d'un assemblage de référence attelé au corps, cette chambre étant raccordée à un conduit d'alimentation en gaz sous pression et à un conduit de prélèvement de la pression qui y règne, un second corps définissant une seconde chambre dont une paroi est portée par l'extrémité susdite de l'assemblage à contrôler qui est raccordé de manière amovible au second corps, cette seconde chambre étant raccordée à un conduit d'alimentation en gaz sous pression et à un conduit de prélèvement de la pression qui y règne, et un troisième corps définissant une enceinte de support pour un élément mobile dont deux faces opposées forment respectivement les parois mobiles de deux chambres dans chacune desquelles débouche l'un des deux conduits de prélèvement.

Dans un mode de réalisation, l'élément mobile constitué par une membrane formant, dans le troisième corps, paroi de séparation des chambres et est associé à un détecteur de sa position.

De manière préférée, le premier et le troisième corps sont assemblés en module de détection raccordé au second corps par un conduit souple, tandis que le deuxième corps est en forme de sonde allongée logée dans un support de son application sur l'extrémité de l'assemblage à contrôler dans lequel elle est monté coulissante dans le sens longitudinal contre l'effet d'un organe élastique d'application et à l'extrémité duquel elle est articulée au moyen d'une rotule.

Par ailleurs, on a parfois constaté qu'un assemblage pouvait être déclaré correct par le dispositif de contrôle pneumatique bien que les pièces qui le composent ne soient pas correctement placées les unes par rapport aux autres. C'est notamment vrai dans le cas de l'assemblage des coupelles sur les queues de soupapes au moyen de demi-cônes formant coins. Pour éviter ce cas de mauvais fonctionnement de l'appareil, la seconde chambre comporte un conduit de purge équipé d'un organe d'obturation dont la position est commandée par un palpeur faisant saillie en direction de la face d'extrémité de l'assemblage à contrôler pour détecter la position d'un élément de l'assemblage par rapport à un autre élément de celui-ci qui coopère avec les parois de la seconde chambre appartenant au second corps et commander la fermeture du conduit de purge si cette position est correcte.

D'autres caractéristiques et avantages de l'invention ressortiront de la description donnée ci-après d'un mode de sa réalisation.

Il sera fait référence aux dessins annexés dans lesquels:
- la figure 1 est un schéma général du dispositif employé pour mettre en oeuvre le procédé de l'invention, appliqué au cas du contrôle de l'assemblage d'une coupelle sur une queue de soupape de au moyen de deux demi-cônes,
- les figures 2, 3 et 4 sont des vues en coupes orthogonales du module de détection de l'invention,
- la figure 5 est une vue en coupe longitudinale de la sonde mobile que comporte le dispositif de l'invention.

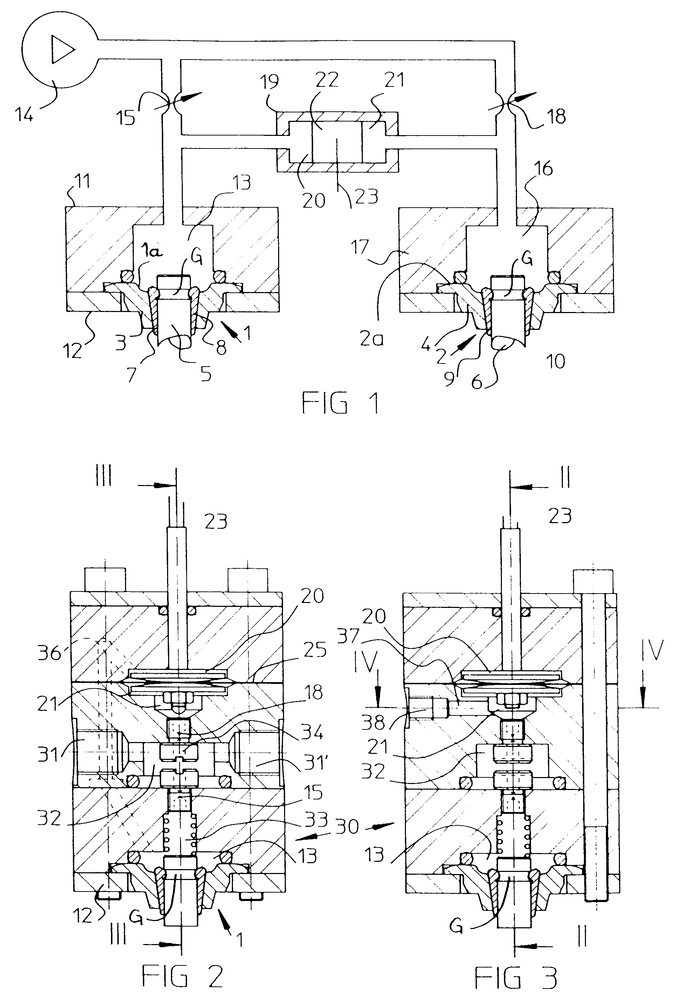

Le schéma de la figure 1 représente deux assemblages identiques 1 et 2 qui sont ici deux assemblages de coupelles 3,4 sur des queues de soupape 5,6 par le moyen de deux demi-cônes 7,8 et 9,10, ces demi-cônes étant positionnés sur la queue de manière connue par leur coopération avec une gorge G que cette queue comporte. Les surfaces de contact de ces différents constituants présentent entre elles des jeux qui définissent un canal substantiellement orienté le long de la queue de soupape 5,6. Il s'ensuit qu'en appliquant une source de fluide (notamment du gaz) sous pression à l'extrémité de chaque assemblage 1,2, on peut créer une fuite (notamment pneumatique) au travers de l'assemblage, dans la direction de son axe dont l'importance est le signe de la qualité de l'assemblage réalisé. En comparant ce signe à une référence qui, par hypothèse, est celle d'un assemblage bien réalisé, on peut contrôler la bonne éxécution de l'assemblage et éliminer les assemblages défectueux.

Pour appliquer ce procédé, l'assemblage 1, qui est l'assemblage de référence, est attelé à demeure à un premier corps 11 (par exemple par une bride 12), ce qui permet de délimiter avec une surface d'extrémité la de l'assemblage 1, une chambre 13 qui peut fuir du coté de l'assemblage 1 et qui est connectée à une source de fluide sous pression 14 via un orifice calibré 15, qui peut être règlable.

D'une manière analogue, l'assemblage 2, qui est l'assemblage à contrôler, forme la paroi d'une chambre 16 délimitée par un deuxième corps 17 qui peut venir s'appliquer de manière amovible mais étanche sur une surface d'extrémité 2a de l'assemblage 2. Cette chambre 16 fuit donc au travers de l'assemblage 2 et est connectée à la même source de gaz sous pression 14 par l'intermédiaire d'un orifice calibré 18 qui peut être également règlable.

Dans un corps 19, on a représenté deux chambres 20 et 21. La chambre 20 est connectée à la chambre 13 associée au montage de référence, tandis que la chambre 21 est connectée à la chambre 16 associée au montage à contrôler. Ces deux chambres sont également délimitées par un élément mobile 22 (représenté ici par un tiroir coulissant) dont la position est en équilibre si les forces s'exerçant à chaque extrémité du tiroir, dues aux pressions règnant dans les chambres 20 et 21, sont égales. Cet élément 22 est porteur d'un organe de détection de la rupture de son équilibre, ici symbolisé en 24, pouvant, par exemple coopérer avec un élément de contact fixe.

On comprend donc, dans le principe, que si le montage 2 est défectueux parce que les demi-cônes 9 et 10 ne sont pas correctement en place (on rappellera que cet assemblage est réalisé de manière automatique), il doit exister un jeu beaucoup plus important entre les constituants de l'assemblage 2 qu'entre ceux de l'assemblage 1. La pression qui s'établit dans la chambre 16 est donc plus faible que celle qui règne dans la chambre 13. Le tiroir 22 se déplace vers la droite de la figure ce qui est interprèté par tout capteur approprié relié à l'organe 23 pour décider d'éliminer l'assemblage qui est contrôlé.

La possibilité de règler le calibre de l'orifice 15 permet un règlage du seuil de déclenchement du dispositif, c'est-à-dire de la pression de référence au-dessous de laquelle le tiroir se déplace.

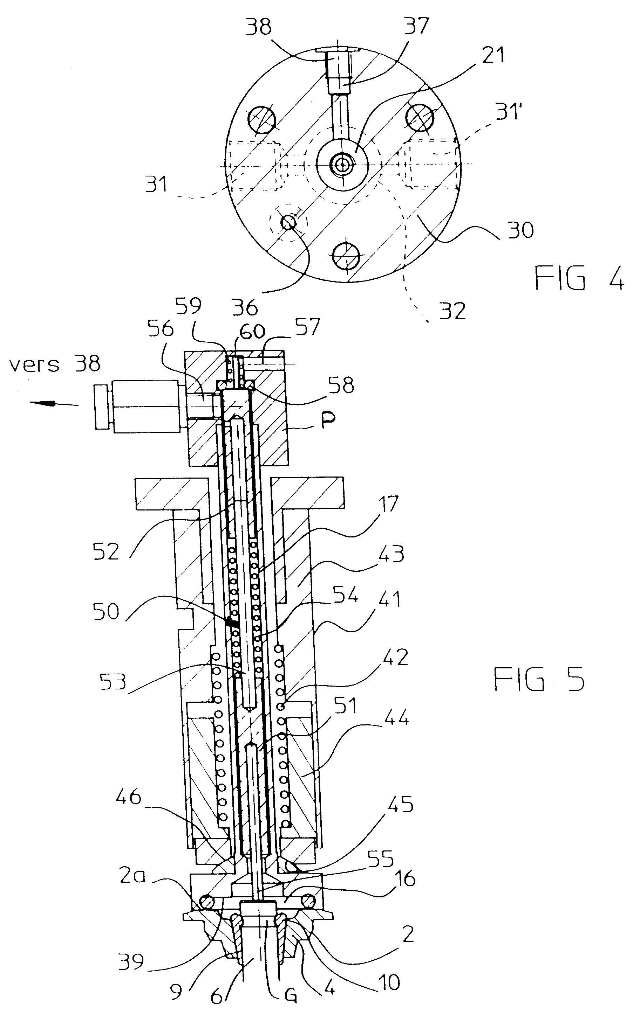

Les figures 2 à 4 sont l'illustration d'un mode de réalisation de l'invention dans lequel les corps 11 et 19 sont réunis en un module de détection 30. On retrouve sur ces figures la plupart des éléments déjà décrits avec les mêmes références. La source de gaz sous pression est connectée au module 30 par un orifice d'entrée 31 qui débouche dans un canal 32 duquel partent deux dérivations, l'une 33, pourvue de l'orifice calibré 15 et débouchant dans la chambre 13, et l'autre 34, pourvue de l'orifice calibré 18 et débouchant dans la chambre 21 d'actionnement de l'organe mobile. Ce dernier est ici représenté sous la forme d'une membrane déformable 35 définissant, dans une cavité du module 30, la chambre 21 et la chambre 20. L'élément 23 est, aux figures 2 à 4, une tige 23 attelée à la membrane 35 qui est, par exemple, associée à un contacteur magnétique. La chambre 20 est reliée à la chambre 13 par un canal 36 interne au module 30. La chambre 21, outre qu'elle est reliée à la source de pression, est également reliée par un conduit 37 possèdant des moyens de connection 38 à la chambre 16 du second corps 17 qui est représenté à la figure 5. Plus exactement, les moyens de connection 38 sont ceux d'un tuyau souple non-représenté, qui relie le conduit 37 au canal ménagé dans le corps 17 conduisant à la chambre 16.

Il faut par ailleurs noter en regard des figures 2 et 4 que le canal 32 possède un orifice 31′ pour être raccorder à un module semblable juxtaposé pour former un canal d'alimentation commun à une batterie de modules de contrôle dont chacun est associé à une sonde. On peut même prévoir, sans sortir du cadre de l'invention, qu'un seul assemblage étalon ou de référence soit prévu pour l'ensemble des modules mis en oeuvre, la chambre 13 qui le surmonterait serait raccordée par des conduits tels que 36 en parallèle les uns des autres, à chacune des chambres 20 associées à chaque sonde.

A la figure 5, on voit que le corps 17 est en forme d'une sonde longitudinale tubulaire, la chambre 16 étant constituée, à l'une de ses extrémités, par un lamage 39 pourvu d'un joint torique 40 qui assure l'étanchéité de l'application de la sonde sur une surface d'extrémité 2a de l'assemblage 2 à contrôler. Cette sonde 17 est logée dans un support 41, dans lequel elle peut coulisser longitudinalement contre l'effet d'un ressort 42 de son application sur l'assemblage à contrôler. Ce support 41 est constitué par deux parties 43 et 44, coulissantes l'une par rapport à l'autre, le ressort 42 étant disposé entre ces parties. La partie 44 comporte une portée sphérique d'extrémité 45 sur laquelle vient s'appuyer une portée correspondante 46 de la sonde 17 sous l'effet du ressort 42. Cette disposition permet un degré de liberté de la sonde par rapport à son support 41, qui est lui-même porté par l'extrémité d'un robot de contrôle, pour prendre en compte les variations possibles de l'orientation du plan de la coupelle 4 par rapport à l'axe d'application 47 de la sonde 17.

Le canal interne au corps 17 qui aboutit dans la chambre 16 est constitué par l'espace libre existant entre la surface interne de l'évidement tubulaire de ce corps et une tige télescopique 50, montée coulissante dans cet évidement. Cette tige 50 est en deux parties 51 et 52, par exemple cannelées extérieurement (ou de section hexagonale) pour constituer l'espace susdit, et par une partie centrale 53 de plus petit diamètre, solidaire de la partie inférieure 51 et sur laquelle coulisse la partie supérieure 52. Un ressort 54 s'étend entre les parties 51 et 52. Par ailleurs, la partie 51 se prolonge dans la chambre 16 par un palpeur 55, situé dans l'axe 47 de la sonde.

Surmontant le tube 17, la sonde comporte une pièce P de raccordement qui, d'une part possède un piquage 56 pour relier la chambre 16 aux moyens de raccordement 38 du module 30 et, d'autre part, un conduit de purge 57 de cette chambre 16, qui communique avec l'espace interne du tube 17 au travers d'un siège 58.

Lorsque la sonde n'est pas appliquée sur la surface 2a de l'assemblage 2, l'équipage mobile 51,52,53,54 est repoussé vers le bas par un ressort 59 disposé entre la pièce de raccordement surmontant le tube 17 et la partie 52 de la tige 50. A l'intérieur de ce ressort, la partie 52 de la tige peut être surmontée par un pion 60 qui forme un élément de butée s'appuyant sur le fond de l'alésage de la pièce de raccordement P, évitant à la partie 52, qui constitue le clapet de fermeture du siège 58, d'écraser de manière trop importante le joint de ce siège. Cette partie 52 est donc décollée du siège 58 et la chambre 16 communique avec le conduit de purge 57. Par ailleurs, le palpeur 55 fait saillie dans le lamage 39.

En appliquant la sonde sur l'assemblage 2, le palpeur 55 est repoussé par la queue 6 de soupape, si celle-ci est correctement placée sur cette queue. La partie 51 suit le même mouvement et entraîne, par le ressort 54, la remontée de la partie 52 qui vient s'appliquer contre le siège 58; le conduit de purge 57 est obturé. La chambre 16 est en liaison avec la chambre 21 du module 30.

Si, comme on le constate parfois, la coupelle 4 est montée à l'extrémité de la queue 6 du fait de l'engagement des demi-cônes 9 et 10, non pas dans la gorge G mais au niveau du chamfrein d'extrémité de la queue 6, le palpeur 55 ne rencontre pas la queue 6 avant que la sonde soit entièrement au contact de la surface 2a de l'assemblage 2. L'obturation du conduit de purge 57 n'est pas assurée et la chambre communique avec ce dernier; la pression qui s'établit dans la chambre 21 du module 30 n'équilibre pas celle règnant dans la chambre 20 et le détecteur 23 enregistre un défaut de montage conduisant à l'élimination de l'assemblage.

L'invention trouve une application intéressante notamment dans le contrôle des assemblages comportant des éléments empilés et centrés sur un axe, tels que le montage des coupelles de ressort à l'extrémité des queues de soupape des moteurs thermiques.

## Revendications

1. Procédé de contrôle de la qualité d'un assemblage mécanique (2) composé de constituants (4,6,9,10) entre lesquels existe un jeu de montage dans lequel une fuite pneumatique peut être créée à partir d'une extrémité de l'assemblage offrant une surface (2a) avec laquelle il est possible de réaliser un raccordement temporaire étanche, consistant à détecter la position d'équilibre d'un élément mobile (22,35) dont deux faces opposées sont soumises respectivement à la pression règnant dans une chambre (16) située en amont de la surface de raccordement (2a) et à celle règnant dans une chambre (13) située en amont d'un assemblage (1) de référence.

2. Dispositif pour mettre en oeuvre le procédé selon la revendication 1, caractérisé en ce qu'il comporte un premier corps (11) définissant une première chambre (13) dont une paroi est portée par un assemblage (1) de référence attelé au corps (11), cette chambre (13) étant raccordée à un conduit d'alimentation (32) en gaz sous pression et à un conduit de prélèvement (36) de la pression qui y règne, un second corps (17) définissant une seconde chambre (16) dont une paroi est portée par l'extrémité (2a) susdite de l'assemblage (2) à contrôler qui est raccordé de manière amovible au second corps (17), cette seconde chambre étant raccordée à un conduit (37) d'alimentation en gaz sous pression et à un conduit de prélèvement (37) de la pression qui y règne, et un troisième corps (19,30) définissant une enceinte de support pour un élément mobile (22,35) dont deux faces opposées forment respectivement les parois mobiles de deux chambres (20,21) dans chacune desquelles débouche l'un des deux conduits (36,37) de prélèvement.

3. Dispositif selon la revendication 2, caractérisé en ce que l'élément mobile (22,35) est associé à un détecteur (23) de sa position.

4. Dispositif selon la revendication 2 ou la revendication 3, caractérisé en ce que l'élément mobile (22) est constitué par une membrane (35) formant dans le troisième corps (19,30) une paroi de séparation des chambres (20 et 21).

5. Dispositif selon l'une des revendications précédentes, caractérisé en ce que l'alimentation en gaz sous pression des première (13) et seconde (16) chambres est réalisée au travers d'orifices calibrés règlables (15,18).

6. Dispositif selon l'une des revendications 2 à 5, caractérisé en ce que le premier (11) et le troisième (19) corps sont assemblés en module (30) de détection raccordé au second corps (17) par un conduit souple.

7. Dispositif selon l'une des revendications 2 à 6, caractérisé en ce que le deuxième corps (17) est en forme de sonde allongée logée dans un support (41) de son application sur l'extrémité (2a) de l'assemblage (2) à contrôler dans lequel elle est monté coulissante dans le sens longitudinal contre l'effet d'un organe élastique (42) d'application et à l'extrémité duquel elle est articulée au moyen d'une rotule (45,46).

8. Dispositif selon l'une des revendications 2 à 6, caractérisé en ce que la seconde chambre (16) comporte un conduit de purge (57) équipé d'un organe d'obturation (52) dont la position est commandée par un palpeur (55) faisant saillie en direction de la face d'extrémité (2a) de l'assemblage (2) à contrôler, pour détecter la position d'un élément (6) de l'assemblage par rapport à un autre élément (4) de celui-ci qui coopère avec les parois de la seconde chambre (16) appartenant au second corps (17), et commander la fermeture du conduit de purge (57) si cette position est correcte.

## Patentansprüche

1. Verfahren zur Kontrolle der Qualität einer mechanischen Verbindung (2), die aus Komponenten (4,6,9,10) besteht, zwischen denen ein Montagespiel vorhanden ist, bei welchem ausgehend von einem Ende der Verbindung, die eine Fläche (2a) zur Herstellung einer vorübergehend dichten Verbindung bietet, ein Leckluftstrom erzeugt werden kann, bestehend aus der Erfassung der Gleichgewichtslage eines beweglichen Elements (22,35), von dem zwei einander entgegengesetzte Flächen jeweils dem in einer stromaufwärts der Anschlußfläche (2a) angeordneten Kammer (16) und dem in einer stromaufwärts einer Referenzverbindung (1) angeordneten Kammer (13) herrschenden Druck ausgesetzt werden.

2. Vorrichtung zur Durchführung des Verfahrens gemäß Anspruch 1, gekennzeichnet durch einen ersten Körper (11), der eine erste Kammer (13) begrenzt, von der eine Wand von einer mit dem Körper (11) verbundenen Referenzverbindung (1) getragen ist, wobei diese Kammer (13) an eine Leitung (32) für die Zufuhr von Druckgas und an eine Leitung (36) zum Abgreifen des dort herrschenden Drucks angeschlossen ist; einen zweiten Körper (17), der eine zweite Kammer (16) begrenzt, von der eine Wand durch das vorgenannte Ende (2a) der zu kontrollierenden Verbindung (2) getragen ist, die lösbar mit dem zweiten Körper (17) verbunden ist, wobei diese zweite Kammer an eine Leitung (37) für die Zufuhr von Druckgas und an eine Leitung (37) zum Abgreifen des dort herrschenden Drucks angeschlossen ist; und einen dritten Körper (19,30), der ein Gehäuse für ein bewegliches Element (22,35) bildet, von dem zwei einander entgegengesetzte Flächen jeweils die beweglichen Wände zweier Kammern (20,21) bilden, in die jeweils eine der beiden Abgreifleitungen (36,37) mündet.

3. Vorrichtung nach Anspruch 2, dadurch gekennzeichnet, daß das bewegliche Element (22,35) mit einem Detektor (23) zur Erfassung seiner Position verbunden ist.

4. Vorrichtung nach Anspruch 2 oder 3, dadurch gekennzeichnet, daß das bewegliche Element (22) durch eine Membran (35) gebildet ist, die in dem dritten Körper (19,30) eine Trennwand der Kammern (20 und 21) bildet.

5. Vorrichtung nach einem der vorhergehenden Ansprüche, dadurch gekennzeichnet, daß die Druckgaszufuhr zur ersten Kammer (13) und zweiten Kammer (16) durch kalibrierte steuerbare Öffnungen (15,18) erfolgt.

6. Vorrichtung nach einem der Ansprüche 2 bis 5, dadurch gekennzeichnet, daß der erste Körper (11) und der dritte Körper (19) zu einem Erfassungsmodul (30) verbunden sind, das durch eine flexible Leitung an den zweiten Körper (17) angeschlossen ist.

7. Vorrichtung nach einem der Ansprüche 2 bis 6, dadurch gekennzeichnet, daß der zweite Körper (17) in Form einer länglichen Sonde vorgesehen ist, die zur Anbringung an dem Ende (2a) der zu kontrollierenden Verbindung (2) in einer Halterung (41) angeordnet ist, in der sie gegen die Wirkung eines elastischen Andruckorgans (42) in Längsrichtung verschiebbar gelagert ist und an dessen Ende sie mittels eines Kugelgelenks (45,46) angelenkt ist.

8. Vorrichtung nach einem der Ansprüche 2 bis 6, dadurch gekennzeichnet, daß die zweite Kammer (16) eine Entlüftungsleitung (57) hat, die mit einem Verschlußorgan (52) versehen ist, dessen Position durch einen in Richtung auf die Endfläche (2a) der zu kontrollierenden Verbindung (2) vorspringenden Fühler (55) gesteuert wird, um die Position eines Elements (6) der Verbindung relativ zu einem anderen Element (4) derselben zu erfassen, der mit Kammer (16) zusammenwirkt, und um das Schließen der Entlüftungsleitung (57) zu steuern, wenn diese Position korrekt ist.

## Claims

1. A process for checking the quality of a mechanical assembly (2) made up of components (4, 6, 9, 10) between which there is an assembly clearance in which a pneumatic leak can be created from an end of the assembly affording a surface (2a) with which it is possible to make a temporary sealing connection, comprising detecting the equilibrium position of a movable element (22, 35) of which two opposed faces are respectively subjected to the pressure obtaining in a chamber (16) disposed upstream of the connecting surface (2a) and the pressure obtaining in a chamber (13) disposed upstream of a reference assembly (1).

2. Apparatus for carrying out the process according to claim 1 characterised in that it comprises a first body (11) defining a first chamber (13) of which a wall is carried by a reference assembly (1) connected to the body (11), said chamber (13) being connected to a conduit (32) for supplying gas under pressure and to a conduit (36) for taking off the pressure which obtains therein, a second body (17) defining a second chamber (16) of which a wall is carried by said end (2a) of the assembly (2) to be checked which is removably connected to the second body (17), said second chamber being connected to a conduit (37) for supplying gas under pressure and to a conduit (37) for taking off the pressure which obtains therein, and a third body (19, 30) defining a support enclosure for a movable element (22, 35) of which two opposite faces respectively form the movable walls of two chambers (20, 21), into each of which opens one of the two take-off conduits (36, 37).

3. Apparatus according to claim 2 characterised in that the movable element (22, 35) is associated with a detector (23) for detecting its position.

4. Apparatus according to claim 2 or claim 3 characterised in that the movable element (22) is formed by a diaphragm (35) which in the third body (19, 30) forms a wall for separating the chambers (20 and 21).

5. Apparatus according to one of the preceding claims characterised in that the supply of gas under pressure for the first chamber (13) and the second chamber (16) is by way of adjustable calibrated orifices (15, 18).

6. Apparatus according to one of claims 2 to 5 characterised in that the first body (11) and the third body (19) are assembled to constitute a detection module (30) which is connected to the second body (17) by a flexible conduit.

7. Apparatus according to one of claims 2 to 6 characterised in that the second body (17) is in the form of an elongated probe accommodated in a support (41) for application thereof to the end (2a) of the assembly (2) to be checked, in which it is mounted slidably in the longitudinal direction against the force of a resilient application member (42) and to the end of which it is pivotally connected by means of a ball joint (45, 46).

8. Apparatus according to one of claims 2 to 6 characterised in that the second chamber (16) comprises a purge conduit (57) provided with a closure member (52) whose position is controlled by a feeler member (55) projecting in the direction of the end face (2a) of the assembly (2) to be checked, to detect the position of an element (6) of the assembly with respect to another element (4) thereof, which co-operates with the walls of the second chamber (16) belonging to the second body (17), and cause closure of the purge conduit (57) if said position is correct.
